# EUROPÄISCHE PATENTSCHRIFT

(11) **EP 3 106 432 B1**
(45) Veröffentlichungstag und Bekanntmachung des Hinweises auf die Patenterteilung: **19.07.2017**
(21) Anmeldenummer: 15172720.3
(22) Anmeldetag: 18.06.2015
(51) Int. Cl.: C01B 32/188

(54) **VERFAHREN ZUM HERSTELLEN VON GRAPHEN**
METHOD FOR PRODUCING GRAPHENE
PROCÉDÉ DE FABRICATION DE GRAPHÈNE

(43) Veröffentlichungstag der Anmeldung: 21.12.2016
(73) Patentinhaber: Bundesrepublik Deutschland, vertreten durch das Bundesmisterium für Wirtschaft und Energie, endvertreten durch den Präsidenten der PTB, 38116 Braunschweig (DE)
(72) Erfinder: Kruskopf, Mattias, 27283 Verden (DE); Pierz, Klaus, 38116 Braunschweig (DE)
(74) Vertreter: Plöger, Jan Manfred

(56) Entgegenhaltungen:
- EP-A2- 2 392 547
- CN-A- 103 213 970
- US-A1- 2014 120 270
- US-B1- 8 779 177
- ZHENGZONG SUN ET AL: "Supplementary InformationGrowth of graphene from solid carbon sources", NATURE, Bd. 468, Nr. 7323, 10. November 2010 (2010-11-10), Seiten 549-552, XP055144136, ISSN: 0028-0836, DOI: 10.1038/nature09579

## Beschreibung

Die Erfindung betrifft ein Verfahren zum Herstellen von Graphen gemäß dem Oberbegriff von Anspruch 1.

Bei aus dem Stand der Technik bekannten Verfahren zum Herstellen von Graphen wird ein Siliziumkarbid-Substrat häufig mit Wasserstoff geätzt und danach unter einer Schutzgasatmosphäre auf eine Temperatur von in der Regel oberhalb 1600° gebracht. Durch die hohe Temperatur zersetzt sich Siliziumkarbid an der Oberfläche. Das Silizium verdampft und lässt den Kohlenstoff auf der Oberfläche zurück. Die Kohlenstoffatome verbinden sich zunächst zu einer sogenannten nullten Lage an Graphen. Ungefähr jedes dritte Kohlenstoffatom dieser nullten Graphen-Lage bildet eine kovalente Bindung mit dem Substrat aus.

Bei weiterem Fortschreiten des Prozesses bildet sich zwischen der nullten Lage und dem Substrat eine weitere Lage an Graphen. Dadurch löst sich die nullte Graphen-Lage vom Substrat ab und bildet die sogenannte erste Lage an Graphen. Diese erste Lage und die nullte Graphen-Lage sind gemeinsam für Silizium-Atome undurchlässig. Der Prozess der Graphen-Bildung kommt daher zum Stillstand. Das Ergebnis dieses Verfahrens ist eine Graphen-Schicht, die auf der nullten Lage aufliegt und mit dieser keine kovalenten Bindungen eingeht.

Bei den hohen Temperaturen, die notwendig sind, um die Zersetzung des Siliziumkarbids zu bewirken, kommt es zu einer Wanderung von atomaren Stufen an der Oberfläche des Substrats. Die Höhe einer Siliziumkarbid-Monolage beträgt ungefähr 0,25 Nanometer. Dabei bilden sich aus mehreren kleinen Stufen mit geringer Höhe nachfolgend Terrassen mit höheren Stufenkanten, insbesondere solche, die größer als 1,5 Nanometer sind. An diesen Stufenkanten kann Silizium an der nullten Lage und der Graphen-Lage vorbei diffundieren, sodass sich weitere Graphen-Schichten bilden können. Das wiederum führt zu einer Störung der obersten Graphen-Schicht, die unerwünscht ist, da sie die vorteilhaften elektronischen Eigenschaften des Graphens, insbesondere eine gleichmäßige Ladungsträgerdichte-Verteilung, lokal stören.

Mit diesen Verfahren zum Herstellen von Graphen lassen sich nur kleinflächige Graphen-Lagen herstellen, die für die Herstellung von vielen Halbleiterbauelementen in der Regel nicht geeignet sind.

Aus der CN 103 213 970 A ist ein Verfahren bekannt, bei dem Graphen aus PMMA durch starkes Erhitzen mittels einer Knallgasflamme unter Vakuum hergestellt wird. Ein solches Verfahren ist für große Substrate nur schlecht geeignet.

Aus der EP 2 392 547 A2 ist ein Graphen-Herstellungsverfahren mittels Gasphasenepitaxie auf ein Siliziumkarbidsubstrat bekannt, bei dem mit einem Inertgas gespült wird, um die Auswirkungen einer Sublimation von Silizium zu vermindern. Wie die Wanderung von Stufen an der Oberfläche des Substrats vermieden werden kann, wird nicht beschrieben.

Der Erfindung liegt die Aufgabe zugrunde, die Herstellung von Graphen zu verbessern.

Die Erfindung löst das Problem durch ein Verfahren mit den Merkmalen von Anspruch 1.

Es hat sich überraschend gezeigt, dass das Aufbringen einer Polymerschicht und das angegebene Temperaturregime dazu führen, dass die Aggregation von atomaren Oberflächenstufen zu größeren Terrassen mit hohen Stufenkanten, was auch unter dem englischen Begriff "step bunching" bekannt ist, im Vergleich zur Wachstumsgeschwindigkeit der Graphen-Schicht und der nullten Lage sinkt. In anderen Worten führt die Polymerschicht dazu, dass sich die Graphen-Schicht bildet, während nur kleine Terrassenstufen vorhanden sind, deren Höhen überwiegend zwischen 0,5 Nanometer und 1,5 Nanometer liegen. Das führt dazu, dass die Ausbildung der Graphen-Schicht nicht durch große Stufen des Substrats gestört wird. Es entstehen daher großflächige Graphen-Schichten.

Es sei darauf hingewiesen, dass das Polymer bei den hohen Temperaturen, bei denen sich das Graphen bildet, vermutlich nicht mehr in seiner ursprünglichen Form als Polymer vorliegt, sondern sich zumindest teilweise zersetzt hat und deshalb hier Zersetzungsprodukte, beispielsweise Kohlenstoff als Oberflächensorbat, eine wichtige Rolle spielen. Es ist also wahrscheinlich, dass mittels Desposition von anderen organischen Substanzen dieselbe Funktionalität erreicht werden kann.

Im Rahmen der vorliegenden Beschreibung wird unter dem Substrat insbesondere ein Objekt verstanden, das kristallin ist, insbesondere monokristallin und bei dem eine Ausgleichsebene durch die Oberfläche einen Fehlerwinkel mit einer Kristallebene einschließt, der kleiner ist als 0,5°, vorzugsweise deutlich kleiner, beispielsweise 0,05°. Je kleiner dieser Fehlerwinkel ist, desto leichter lassen sich großflächige Graphen-Schichten herstellen. Allerdings ist die Herstellung derartiger Substrate aufwändig, sodass es aus wirtschaftlichen Überlegungen heraus vorteilhaft ist, auch Substrate mit größeren derartigen Fehlerwinkeln verwenden zu können.

Unter dem Aufwachsen der Graphen-Schicht wird der Schritt verstanden, dass das Substrat, gegebenenfalls mit einer auf das Substrat aufgebrachten Beschichtung, in eine derartige Umgebung gebracht wird, dass sich die zumindest eine Graphen-Schicht auf dem Substrat bildet. Vorzugsweise werden die Umgebungsparameter, wie beispielsweise Druck, Temperatur, Temperaturänderungsgeschwindigkeiten, Haltezeiten, die Atmosphärenzusammensetzung und gegebenenfalls Einstrahlbedingungen von externer Wärmestrahlung so gewählt, dass sich zumindest überwiegend genau eine Graphen-Schicht bildet.

Unter dem Aufwachsen der Graphen-Schicht wird insbesondere das Herstellen einer Graphen-Schicht verstanden, deren gemessenes Raman-Spektrum (im Wellenzahlen-Bereich zwischen 2600 cm⁻¹ und 2800 cm⁻¹) die charakteristische 2D-Linie aufweist, mit einer für Monolagen-Graphen typischen Halbwertsbreite von unter 50 cm⁻¹ FWHM (full width of half maximum). Eine derartige Graphen-Schicht besitzt so wenige kovalente Bindungen zu ihrer Unterlage, dass sich die genannte 2D-Resonanz-Mode ausbilden kann. Das Herstellen der nullten Lage ist daher vorzugsweise ein Teil-Schritt des Aufwachsens der Graphen-Schicht, dieser Schritt ist aber erst beendet, wenn eine Schicht mit der oben genannten 2D-Linie im Raman-Spektrum entstanden ist.

Die erfindungsgemäß hergestellte Schicht zeigt vorzugsweise die genannte 2D-Linie auf über 90% der Fläche.

Unter dem Polymer wird insbesondere eine Kohlenstoffverbindung verstanden, die dazu führt, dass bei einer Temperatur von 1300°C, insbesondere von 1800°C, das organische Material selbst und/oder ein Abbauprodukt auf der Oberfläche vorhanden ist. Als Kohlenstoffverbindung können Fotolacke, insbesondere PMMA-Lack oder Fotolack AZ5214E von MicroChemicals, verwendet werden. Beispielsweise werden 50 Milligramm PMMA Reinsubstanz in 100 ml eines Gemischs aus 2/3 Aceton und 1/3 Isopropanol bezogen auf das Volumen gelöst und diese Lösung wird auf die Oberfläche aufgeschleudert, zum Beispiel bei 6000 Umdrehungen pro Minute.

Unter dem Aufbringen der Polymerschicht wird insbesondere verstanden, dass ein Polymer, insbesondere ein Fotolack oder in Lösungsmittel gelöste Reinsubstanz, so und in einer solchen Menge, insbesondere als Sorbat, auf die Oberfläche des Substrats aufgebracht wird, dass dieser beim nachfolgenden Aufwachsen der Graphen-Schicht dazu führt, dass sich eine Graphen-Schicht bildet, die weniger Fehlstellen aufweist als wenn das gleiche Verfahren ohne das Aufbringen der Schicht durchgeführt worden wäre. Vorzugsweise wird das Aufbringen der Polymerschicht so durchgeführt, dass die mittlere Dicke der Polymerschicht bzw. des Sorbats kleiner ist als 10 Nanometer, beispielsweise 0,5 Nanometer bis 5 Nanometer beträgt, wobei die Bedeckung der Oberfläche kleiner 100 % sein kann.

Das Aufbringen kann gemäß einer bevorzugten Ausführungsform den Schritt eines nicht vollständigen Entfernens der Polymerschicht umfassen. Es hat sich herausgestellt, dass zu dicke Polymerschichten den erwünschten Effekt nicht zeigen. Das nicht vollständige Entfernen kann beispielsweise ein Abspülen oder Abblasen mit Druckgas umfassen. Andere Depositionsverfahren wie beispielsweise ALD (Atomic Layer Deposition) könnten sich hier ebenso eignen, um definierte Atomschichten auf dem Substrat abzuscheiden.

Gemäß einer bevorzugten Ausführungsform umfasst das erfindungsgemäße Verfahren den Schritt eines Erhitzens des Substrats auf eine Temperatur von zumindest 1300 °C in einer Inertgas-Atmosphäre nach dem Aufbringen der Polymerschicht/Sorbate. Vorzugsweise beträgt der Druck 0,8 bis 1,2 bar. Unter dem Inertgas wird insbesondere ein Edelgas, beispielsweise Argon verstanden. Der Druck von 0,8 bis 1,2 bar führt dazu, dass die Zersetzungstemperatur von Siliziumkarbid steigt. Die Zersetzung von Siliziumkarbid bei höheren Temperaturen hat wiederum den Vorteil, dass die Kohlenstoffatome nach ihrem Entstehen an der Oberfläche mobiler sind, sodass die Ausbildung von Graphen erleichtert ist.

Vorzugsweise wird das Substrat nach dem Aufbringen der Polymerschicht auf eine Temperatur von zumindest 1300 °C unter den oben genannten Bedingungen erhitzt.

Besonders günstig ist es, wenn die Temperatur von zumindest 1400 °C für zumindest 8 Minuten, insbesondere zumindest 10 Minuten, gehalten wird. Vorzugsweise beträgt die Temperatur bei diesem Halten höchstens 1500 °C, insbesondere höchstens 1450 °C.

Bei diesem Halten der Temperatur unter den oben angegebenen Bedingungen für die Temperatur und die Art und den Druck der Atmosphäre bildet sich die oben beschriebene nullte Graphen-Lage. Bei dieser Lage handelt es sich um eine Schicht, die zwar die Struktur von Graphen besitzt, aber so viele kovalente Bindungen zum Substrat besitzt, dass die für Graphen typischen Eigenschaften wie die Ausbildung der 2D-Linie im Raman-Spektrum sich nicht einstellen. Das erfindungsgemäße Verfahren zielt daher ab auf die Herstellung der nullten Graphen-Lage und von Graphen im engeren Sinne, das heißt auf eine Graphen-Schicht, die so wenige kovalente Bindungen zu einem Untergrund ausbildet, dass die für Graphen typische 2D-Linie im Ramanspektrum vorhanden ist.

Das Verfahren umfasst den Schritt eines nachfolgenden Erhitzens auf zumindest 1600°C, insbesondere zumindest 1750 °C, in der oben genannten Inertgas-Atmosphäre, sodass sich eine freie Graphen-Schicht bildet. Unter der freien Graphen-Schicht wird die Graphen-Schicht bezeichnet, die so wenige Bindungen zu dem Untergrund aufweist, dass die sogenannte 2D-Linie im Ramanspektrum auftritt.

Diese zweite Temperatur wird vorzugsweise für höchstens zwei Stunden gehalten.

Es sind Verfahren zum Herstellen von Graphen bekannt, bei denen das Substrat vor dem Erhitzen auf die Zersetzungstemperatur des Siliziumkarbids geätzt werden, meistens in einer Wasserstoffatmosphäre. Ein Ätzen, insbesondere mit Wasserstoff, kann zu einer unerwünschten Akkumulation von Stufenkanten auf der Oberfläche führen und somit zur Erhöhung der Terrassenstufenkanten beitragen, weshalb diese Verfahren hier nicht standardmäßig angewendet wurden. Es sind auch Verfahren zum Herstellen von Graphen bekannt, bei denen das Substrat vor dem Erhitzen auf die Zersetzungstemperatur des Silziumkarbids nicht geätzt wird. Es hat sich jedoch gezeigt, dass die Reproduzierbarkeit dieser Verfahren geringer ist hinsichtlich der Herstellung von einlagigem Graphen und der Vermeidung von unerwünschten, mehrere Nanometer hohen Terrassenstufen auf der Siliziumkarbid-Oberfläche. Die Stufenhöhen lassen sich mit dem in der Erfindung beschriebenen Verfahren auf 0,5 Nanometer bis 1,5 Nanometer hohe Terrassen begrenzen.

Gemäß einer bevorzugten Ausführungsform umfasst das Aufbringen der Polymerschicht die Schritte eines Aufschleuderns einer polymerhaltigen Flüssigkeit auf das Substrat, sodass ein vorpräpariertes Substrat entsteht, das Waschen des vorpräparierten Substrats mit einem für das organische Material, insbesondere das Polymer und/oder des Sorbats, geeigneten Lösungsmittel und das Entfernen des Lösungsmittels, insbesondere durch Abschleudern und/oder Abblasen mit Druckgas. Das Lösungsmittel sollte eine ausreichende Löslichkeit für den jeweiligen Stoff /Polymer bieten, um es lösen zu können, jedoch gleichzeitig in der Löslichkeit limitiert sein, sodass weiterhin genügend Polymerrückstände an der Oberfläche verweilen. Ein geeignetes Lösungsmittel wird in Vorversuchen ermittelt. Dabei werden unterschiedliche Lösungsmittel mit dem gleichen organischen Material, insbesondere dem gleichen Polymer, verwendet und die gleichen Verfahrensschritte durchgeführt. Dasjenige Lösungsmittel ist geeignet, bei dessen Verwendung eine Graphen-Schicht entsteht.

Alternativ umfasst das Aufbringen der Polymerschicht den Schritt des Aufschleuderns einer polymerhaltigen Flüssigkeit, die Polymer und ein Lösungsmittel enthält, auf das Substrat, wobei die Flüssigkeit einen so geringen Anteil an Polymer enthält, dass nach dem Verdunsten und/oder Verdampfen des Lösungsmittels eine Polymerschicht mit einer Dicke von höchstens 10 Nanometer, insbesondere höchstens 4 Nanometer, entsteht. Vorzugsweise hat die Polymerschicht eine Dicke von zumindest 0,5 Nanometer. Diese Methode hat sich als besonders vorteilhaft erwiesen.

Im Folgenden wird die Erfindung anhand der beigefügten Zeichnungen näher erläutert. Dabei zeigt
- Figur 1a: schematisch ein Ablaufdiagramm eines erfindungsgemäßen Verfahrens gemäß einer ersten Ausführungsform,
- Figur: 1 b ein erfindungsgemäßes Verfahren gemäß einer zweiten Ausführungsform,
- Figur 2: die AFM-Phasenbilder und die AFM-Topographien von Oberflächen des Substrats nach Ätzen mit Wasserstoff (linke Teilbilder) sowie nach Aufbringen der Polymerschicht im Rahmen eines erfindungsgemäßen Verfahrens (rechte Teilbilder),
- Figur 3: einen Vergleich der Topographien von Substraten mit Graphen-Schichten, die mit einem Verfahren nach dem Stand der Technik (linkes Teilbild) und einem erfindungsgemäßen Verfahren (rechtes Teilbild) hergestellt wurden, und
- Figur 4: die Halbwertsbreite der 2D-Linien des Graphens auf dem Substrat nach Durchführen eines erfindungsgemäßen Verfahrens.

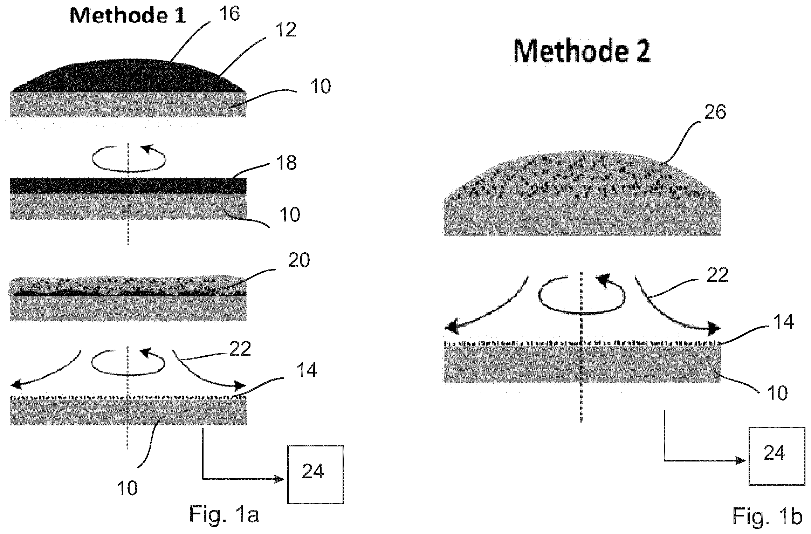

Figur 1a zeigt schematisch die Schritte eines erfindungsgemäßen Verfahrens. Zunächst wird ein Substrat 10 aus Siliziumkarbid (SiC) bereitgestellt. Vorzugsweise beträgt ein Fehlwinkel einer Substratoberfläche 12 zu der Kristallebene höchstens 0,5 ° auf der (0001)-Kristallebene.

Auf das Substrat 10, insbesondere also auf die Substratoberfläche 12, wird dadurch eine Polymerschicht 14 (vgl. Teilbild ganz unten) aufgebracht, dass die Substratoberfläche 12 mit einem flüssigen Polymer 16 benetzt wird. Beispielsweise wird zunächst eine Schicht mit einer Schichtdicke von 100 bis 1500 µm, insbesondere 500 µm, aus PMMA oder AZ-Fotolack aufgebracht. Das erfolgt mittels einem entsprechend geeigneten Lösungsmittel wie beispielsweise Aceton für PMMA oder Isopropanol für AZ-Lacke oder eine Mischung aus beidem. Das Polymer 16 wird bei hoher Drehzahl, beispielsweise 6000 bis 8000 Umdrehungen pro Minute, aufgeschleudert, wie durch die gebogenen Pfeile angedeutet ist. So wird eine gleichmäßige Schichtdicke erreicht.

Nachfolgend wird eine Wartezeit T_{w} von beispielsweise T_{w} = 10 Minuten abgewartet, sodass eine gute Haftung zwischen dem Polymerfilm 18 und der Silziumkarbidoberfläche 12 entsteht.

Der Polymerfilm 18 wird danach mittels eines Lösungsmittels 20 teilweise entfernt, beispielsweise mittels Ultraschall. In anderen Worten kann das Substrat 10 mit dem Polymerfilm 18 in ein Ultraschallbad mit dem Lösemittel 20 gelegt werden. Bei dem Lösungsmittel handelt es sich um eine Flüssigkeit, mittels der der Polymerfilm 18 ablösbar ist.

Das Lösungsmittel kann beispielsweise Isopropanol oder Aceton sein. Wird Isopropanol verwendet, ist es vorteilhaft, wenn es ULSI-Qualität hat (ULSI = ultra large scale integration). Dadurch wird ein Großteil des Polymerfilms 18 entfernt. Das Lösemittel 20 wird in einem nachfolgenden Schritt abgeschleudert. Als Drehfrequenzen eignen sich 6000 - 8000 Umdrehungen pro Minute. Günstig ist es, wenn das Abschleudern durch Druckgas 22, insbesondere Stickstoffgas, unterstützt wird.

Nach dem Abschleudern des Lösungsmittels 20 und eines Großteils des Polymerfilms 18 verbleibt die Polymerschicht/das Sorbat 14 auf dem Substrat 10. Eine Polymerschichtdicke d der Polymerschicht 14 beträgt vorzugsweise zwischen 0,5 Nanometer und 5 Nanometer. Zudem kann eine Oberflächenbedeckung kleiner als 100 % sein.

Nach dem Aufbringen der Polymerschicht 14 wird das Substrat in eine schematisch eingezeichnete Prozesskammer 24 überführt.

Figur 1b zeigt eine alternative Möglichkeit zum Aufbringen der Polymerschicht 14 auf das Substrat 10. Dazu wird die Oberfläche 12 mit einer schwachen Lösung 26 des Polymers benetzt und die Lösung 26 danach mit beispielsweise 6000 - 8000 Umdrehungen pro Minute abgeschleudert. Eine Unterstützung mit Druckgas 22 ist vorteilhaft. Die Polymer-Schicht bzw. die Polymer-Sorbate mit einer Oberflächenbedeckung von weniger als 100% und die Schichtdicke beträgt bei dieser Art der Herstellung ebenfalls weniger Nanometer, beispielsweise zwischen 0,5 Nanometer und 5 Nanometer.

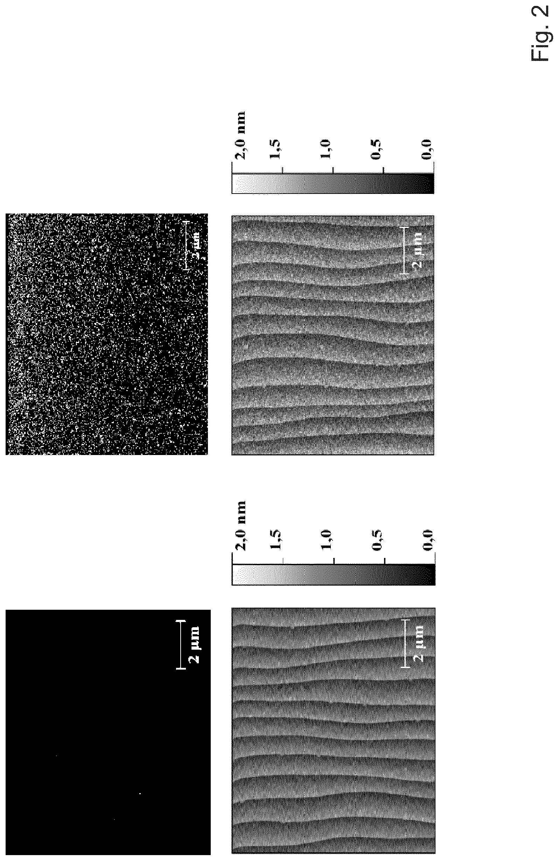

Figur 2 zeigt in den oberen Teilbildern das AFM-Phasenbild einer wasserstoffgeäzten Siliziumkarbid-Oberfläche (linkes Teilblatt) und eine zusätzlich durch das oben beschriebene Verfahren mit einer Polymerschicht versehene Silziumkarbid-Oberfläche (rechtes Teilbild). Es ist zu erkennen, dass das Aufbringen der Polymerschicht dazu führt, dass im AFM-Phasenkontrast Materialunterschiede (AFM: Englisch für atomic force microscope, Rasterkraftmikroskop) aufgrund der mit Sorbaten bedeckten, rauen Oberfläche sichtbar werden, welches zusätzlich in den Topographie-Aufnahmen (siehe Aufnahmen mit Farbskala) zu erkennen ist.

Nach dem Aufbringen der Polymerschicht wird das Substrat in der Prozesskammer mit einer Temperaturerhöhungsgeschwindigkeit von 0,1 bis 5 Kelvin pro Sekunde auf eine erste Temperatur von 1100 °C bis 1450 C° gebracht, im vorliegenden Fall von 1400°C. Die Atmosphäre ist eine Argon-Atmosphäre bei Umgebungsdruck von 1013 Hektopascal. Bei diesem Schritt, der auch als thermal facetting bekannt ist, verändert sich die Kristalloberfläche des Substrats 10, sodass sich regelmäßige Stufenstrukturen mit einer Höhe von 0,5 Nanometer bis 0,8 Nanometer einstellen. Die erste Temperatur wird für 15 bis 60 Minuten, vorzugsweise zirka 30 Minuten gehalten.

In einem nachfolgenden Schritt wird die Temperatur mit einer Temperaturerhöhungsgeschwindigkeit von 0,1 bis 5 Kelvin pro Sekunde auf eine zweite Temperatur von zumindest 1600 °C, insbesondere zumindest 1750 °C gebracht. Im vorliegenden Fall beträgt die zweite Temperatur 1750°C. Diese zweite Temperatur wird für 5 bis 10 Minuten gehalten. Dabei liegt die Inertgas-Atmosphäre vor. Die zweite Temperatur ist vorzugsweise kleiner als 2000 °C, insbesondere kleiner als 1950 °C. Bei dieser zweiten Temperatur erfolgt das Graphen-Wachstum. Danach wird das Substrat auf Raumtemperatur abgekühlt, beispielsweise mit einer Temperaturänderungsgeschwindigkeit von -0,1 bis -5 Kelvin pro Sekunde

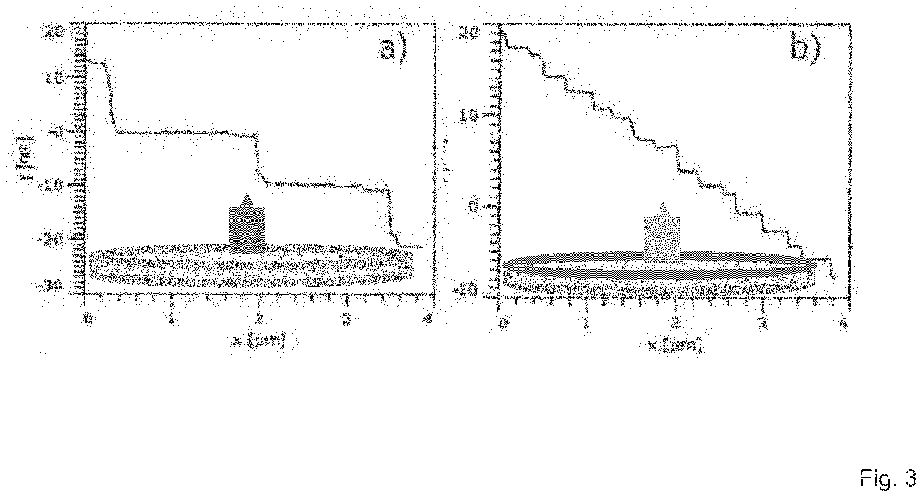

Figur 3 zeigt im linken Teilbild eine AFM-Topographie für eine nach dem Stand der Technik hergestellte Probe. Im rechten Teilbild b ist die AFM-Topographie für eine Probe gezeigt, die nach dem oben beschriebenen Verfahren hergestellt wurde. Es ist zu erkennen, dass das erfindungsgemäße Verfahren zu mehr Stufenkanten führt, die dann aber weniger hoch ausgebildet sind.

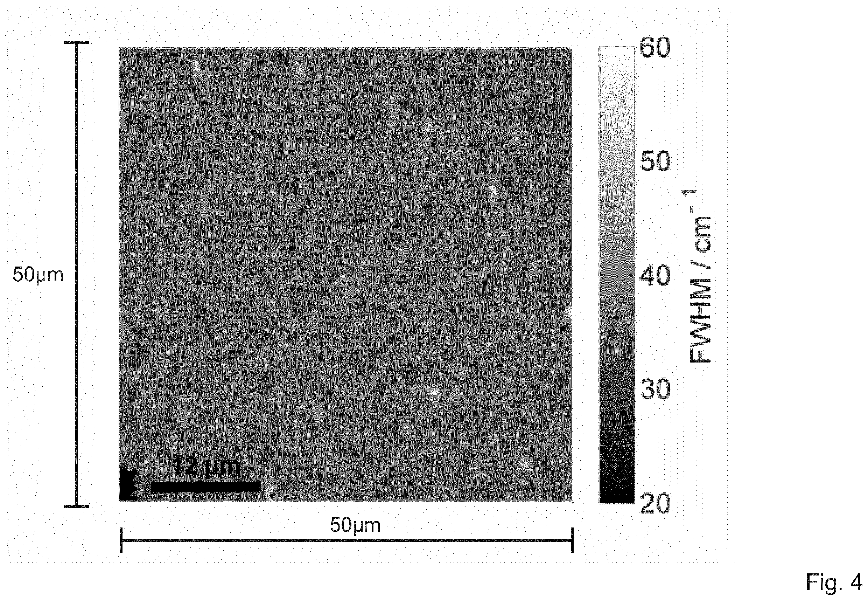

Figur 4 zeigt, dass daraus eine in hohem Maße homogene Graphen-Schicht resultiert.

### Bezugszeichenliste

- 10: Substrat
- 12: Substratoberfläche
- 14: Polymerschicht/Sorbat
- 16: Polymer

- 18: Polymerfilm
- 20: Lösungsmittel/Lösung
- 22: Druckgas
- 24: Prozesskammer

- T_{w}: Wartezeit
- d: Polymer-Schichtdicke

## Patentansprüche

1. Verfahren zum Herstellen von Graphen, mit den Schritten:
(a) Bereitstellen eines Substrats (10) aus Siliziumkarbid,
(b) Aufwachsen einer Graphen-Schicht auf das Substrat (10) und
(c) Aufbringen einer Polymerschicht (14) auf das Substrat (10) vor dem Aufwachsen der Graphen-Schicht,
**gekennzeichnet durch** die Schritte:
(d) nach dem Aufbringen der Polymerschicht (14) Erhitzen des Substrats (10) auf eine erste Temperatur von zumindest 1100°C in einer Inertgas-Atmosphäre,
(e) Halten der Temperatur von zumindest 1300°C für zumindest 8 Minuten und
(f) nach dem Halten der Temperatur Erhitzen des Substrats (10) auf eine zweite Temperatur, die zumindest 1600°C beträgt, in der Inertgas-Atmosphäre, sodass sich eine Graphen-Schicht bildet.

2. Verfahren nach Anspruch 1, **dadurch gekennzeichnet, dass** nach dem Aufbringen der Polymerschicht (14) das Erhitzen des Substrats (10) auf eine erste Temperatur von mindestens 1300°C erfolgt.

3. Verfahren nach einem der vorstehenden Ansprüche, **dadurch gekennzeichnet, dass** die Inertgas-Atmosphäre einen Druck von 0,8 bis 1,2 bar hat.

4. Verfahren nach einem der vorstehenden Ansprüche, **dadurch gekennzeichnet, dass**
nach dem Halten der Temperatur das Erhitzen des Substrats (10) auf eine zweite Temperatur von zumindest 1750°C erfolgt.

5. Verfahren nach einem der vorstehenden Ansprüche, **dadurch gekennzeichnet, dass** das Aufbringen der Polymerschicht (14) die folgenden Schritte umfasst:
- Aufschleudern einer polymerhaltigen Flüssigkeit auf das Substrat (10), sodass ein vorpräpariertes Substrat (10) entsteht,
- Waschen des vorpräparierten Substrats (10) mit einem Lösungsmittel (20) und
- Entfernen des Lösungsmittels (20), insbesondere durch Abschleudern und/oder Abblasen mit Druckgas (22).

## Claims

1. Method for making graphene comprising the steps:
(a) supplying a substrate (10) made of silicon carbide,
(b) growing a graphene layer on the substrate (10) and
(c) applying a polymer layer (14) onto the substrate (10) prior to growing the graphene layer,
**characterised by** the steps:
(d) heating the substrate (10) following the application of the polymer layer (14) to a first temperature of at least 1100°C in an inert gas atmosphere,
(e) maintaining the temperature of at least 1300°C for at least 8 minutes and
(f) after maintaining the temperature, heating the substrate (10) to a second temperature of at least 1600°C in the inert gas atmosphere, resulting in the formation of a graphene layer.

2. Method according to claim 1, **characterised by** the fact that the application of the polymer layer (14) is followed by the heating of the substrate (10) to a first temperature of at least 1300°C.

3. Method according to one of the above claims, **characterised by** the fact that the inert gas atmosphere features a pressure of 0.8 to 1.2 bar.

4. Method according to one of the above claims, **characterised by** the fact that the maintenance of the temperature is followed by heating the substrate (10) to a second temperature of at least 1750°C.

5. Method according to one of the above claims, **characterised by** the fact that the application of the polymer layer (14) comprises the following steps:
- spin-coating the substrate (10) with a liquid that contains polymers, resulting in a prepared substrate (10),
- washing the prepared substrate (10) using a solvent (20) and
- Removing the solvent (20), in particular by means of spinning and/or blowing using compressed gas (22).

## Revendications

1. Procédé pour la fabrication de graphène, comprenant les étapes suivantes consistant à :
(a) fournir un substrat (10) en carbure de silicium,
(b) faire croître une couche de graphène sur le substrat (10), et
(c) appliquer une couche de polymère (14) sur le substrat (10) avant de faire croître la couche de graphène,
**caractérisé par** les étapes consistant à :
(d) après l'application de la couche de polymère (14), chauffer le substrat (10) à une première température d'au moins 1100° C dans une atmosphère de gaz inerte,
(e) maintenir la température d'au moins 1300° C pendant au moins huit minutes, et
(f) après le maintien de la température, chauffer le substrat (10) à une seconde température, qui s'élève à au moins 1600° C, dans l'atmosphère de gaz inerte, de sorte qu'il se forme une couche de graphène.

2. Procédé selon la revendication 1, **caractérisé en ce qu'**après l'application de la couche de polymère (14) le chauffage du substrat (10) a lieu jusqu'à une première température d'au moins 1300° C.

3. Procédé selon l'une des revendications précédentes, **caractérisé en ce que** l'atmosphère de gaz inerte a une pression de 0,8 à 1,2 bars.

4. Procédé selon l'une des revendications précédentes, **caractérisé en ce que**, après le maintien de la température, le chauffage du substrat (10) a lieu jusqu'à une seconde température d'au moins 1750° C.

5. Procédé selon l'une des revendications précédentes, **caractérisé en ce que** l'application de la couche de polymère (14) inclut les étapes suivantes consistant à :
- projeter un liquide contenant un polymère sur le substrat (10), de sorte qu'il se forme un substrat (10) préalablement préparé,
- laver le substrat préalablement préparé (10) avec un solvant (20) et
- éliminer le solvant (20), en particulier par projection et/ou par soufflage avec un gaz sous pression (22).
